# EUROPEAN PATENT APPLICATION

(11) **EP 1 281 695 A1**
(43) Date of publication of application: **05.02.2003**
(21) Application number: 01980899.7
(22) Date of filing: 25.10.2001
(51) Int. Cl.: C04B 35/80

(54) **METHOD FOR PRODUCING SIC FIBER/SIC COMPOSITE MATERIAL HAVING HIGH STRENGTH**

(30) Priority: 27.02.2001 JP 2001052147
(71) Applicant: JAPAN SCIENCE AND TECHNOLOGY CORPORATION, Kawaguchi-shi, Saitama 332-0012 (JP)
(72) Inventor: KOHYAMA, Akira, c/o Institute of Advanced Energy, Uji-shi, Kyoto 611-0011 (JP); KOTANI, Masaki, c/o Institute of Advanced Energy, Uji-shi, Kyoto 611-0011 (JP); KATOH, Yutai, c/o Institute of Advanced Energy, Uji-shi, Kyoto 611-0011 (JP)
(74) Representative: Müller-Boré & Partner Patentanwälte
(86) International application number: JP0109360
(87) International publication number: WO02068360

(57) **Abstract**

A SiC fiber preform is impregnated with polyvinyl-silane (PVS), which has structural units (a) and (b) at an a/b ratio of 1, in an open or vacuum atmosphere. The impregnated SiC fiber preform is preheated at 300-400°C in an inert gas atmosphere to moderate PVS to a viscous or semi-cured state. The preheated SiC fiber preform is then pyrolyzed in an argon atmosphere under application of a unidirectional pressure. A product is SiC fiber-reinforced SiC-matrix composite excellent in mechanical strength and high-temperature property with high density. The fiber-reinforced SiC composite is further densified by impregnation of PVS slurry suspending fine SiC particles therein or by repetition of impregnation with PVS and pressure-less pyrolysis after the pressurized pyrolysis.

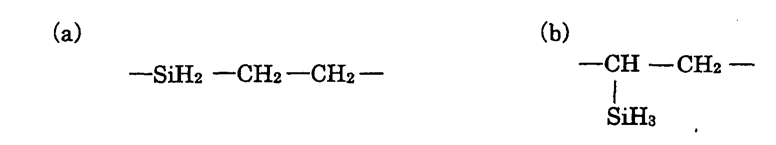

## Description

### TECHNICAL FIELD OF THE INVENTION

The present invention relates to SiC composite, which is useful as a structural member of aircraft or spacecraft, a nuclear reactor, a nuclear fusion power reactor or the like exposed to a high-temperature atmosphere or neutron radiation, excellent in heat-resistance and irradiation resistance.

### BACKGROUND OF THE INVENTION

Various ceramics such as SiC and Si₃N₄ good of heat-resistance, corrosion-resistance and mechanical strength have been developed so far for structural members of aircraft or spacecraft, a nuclear reactor or the like operated under severe conditions. Such ceramics are also used as members of heat exchangers or mechanical seals operated under heavy-duty conditions. Especially, SiC is a suitable material in various industrial fields from aerospace to nuclear power generation, due to its excellent heat- and wear-resistance as well as reduced-activation property in nuclear environment.

SiC is brittle itself, despite of good high-temperature property with a sublimation temperature higher than 2600°C. In order to overcome poor toughness, SiC composite reinforced with SiC fibers has been proposed, as disclosed in A. Lacombe and C. Bonnet, 2nd Int. Aerospace Planes Conf. Proc. AIAA-90-5208 (1990) and C. W. Hollenberg et al., J. Nucl. Mat., 219, (1995)70-86.

A representative method for production of fiber-reinforced SiC composite is a polymer impregnation and pyrolysis process, wherein a SiC fiber preform is impregnated with a polymeric SiC precursor, and then pyrolyzed to form a matrix. The polymer impregnation and pyrolysis process, which resembles a conventional FRP (fiber-reinforced plastics) manufacturing process in impregnation of a fiber preform with liquid material, is expected as a process suitable for manufacturing large-scale complicated parts. However, a polymeric SiC precursor, which infiltrate into openings between SiC filaments, remarkably reduces its volume due to change of density and weight loss during pyrolysis. The volumetric shrinkage causes inclusion of many pores in the SiC composite, so that a pyrolyzed product is too porous to take advantage of intrinsic properties of SiC.

The fiber-reinforced SiC composite is densified by repetition of impregnation and pyrolysis so as to fill pores with a polymeric SiC precursor. But, openings are often plugged with the polymeric SiC precursor, when the polymeric SiC precursor is boiled up and cured at random. Once the openings are plugged, the polymeric SiC precursor does not infiltrate any more into pores between filaments or bundles. As a result, densification of the SiC composite is insufficiently finished.

There is also another proposal for densification of SiC composite, wherein extrusion of polymeric slurry from a SiC fiber preform is suppressed by curing treatment such as oxidation with a heat or irradiation with electron beam before pressurized pyrolysis, and then a polymer-impregnated fiber preform is pressure-pyrolyzed. Pressurized pyrolysis for densification is advantageous in the polymer impregnation and pyrolysis process for manufacturing SiC fiber-reinforced SiC-matrix composite useful as various parts, but such the curing treatment often worsens high-temperature property of the SiC composite and also needs expensive electron beam irradiating equipment or the like.

### SUMMARY OF THE INVENTION

The present invention aims at provision of dense SiC fiber-reinforced SiC-matrix composite good of mechanical properties without drawbacks as above-mentioned. An object of the present invention is to densify such fiber-reinforced SiC composite by pressurized pyrolysis of a polymer-impregnated fiber preform without either extrusion of polymeric slurry during pyrolysis or cracking caused by application of a pressure.

The present invention proposes a new method of manufacturing SiC-matrix composite reinforced with SiC fiber. In the proposed method, a SiC fiber preform is impregnated with polyvinyl-silane (PVS) having the under-mentioned structural units (a) and (b) with an a/b ratio of 1. The PVS-impregnated SiC fiber preform is preheat-treated at 300-400°C in an inert gas atmosphere to moderate PVS to a viscous or semi-cured state. Thereafter, the preheat-treated fiber preform is pressure-pyrolyzed in an argon atmosphere under application of a unidirectional pressure.

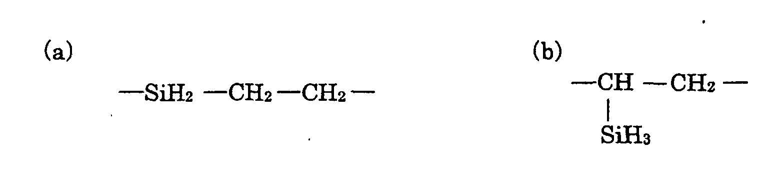

A mixture of PVS with fine SiC particles at a ratio not more than 50 mass % may be used for impregnation of the SiC fiber preform. When impregnation with PVS and pressure-less pyrolysis are alternately repeated after pressurized pyrolysis, the fiber-reinforced SiC composite product is further improved in density and strength.

### PREFERRED EMBODIMENTS OF THE INVENTION

The inventive method selectively uses PVS having the above-mentioned structural units (a), (b) with an a/b ratio of 1, among silicon compounds having vinyl groups or synthesized by polymerization of vinyl compounds.

The defined PVS mainly comprises one-dimensional molecular structure having side chains to which many Si-H bonds are added, with a liquid phase of low-viscosity (approximately 70cP) at an ambient temperature. Viscosity of PVS is kept at a low value enough to enable impregnation of a fiber preform, even when SiC particles are added at a substantial ratio. Furthermore, PVS is converted into ceramics having the same composition as polycarbosilane at a yield ratio of 30-40 mass %.

PVS is a polymeric SiC precursor which continuously changes its viscosity during pyrolysis, so that its cured state can be controlled by a heating temperature in an inert gas atmosphere. A heating temperature is properly predetermined from various experiments on relationship between a heating temperature and a cured degree, since it is difficult to directly measure a cured state of the polymer at a high temperature. PVS is still fluid at a heating temperature below 300°C and mostly is extruded Out of a SiC fiber preform without remaining therein. PVS is excessively cured at a heating temperature above 400°C on the contrary. Excessive curing causes severe cracking in the following pressurized pyrolysis step without improvement in density. The SiC fiber preform is preferably held in contact with the PVS with a pressure for 10 minutes or so.

In the case where a polymeric SiC precursor for impregnation of a SiC fiber preform is conditioned to such a cured state effective for inhibiting extrusion of the polymeric slurry in the following pressurized pyrolysis step, densification of SiC composite is promoted during pressurized pyrolysis. Consequently, fiber-reinforced SiC composite good of mechanical strength is produced. Especially, density and strength of fiber-reinforced SiC composite are substantially influenced by a cured state of the polymeric SiC precursor in addition to a pressure and a temperature during pyrolysis. Therefore, the cured state, the pyrolyzing pressure and the heating temperature are determined in response to required property of fiber-reinforced SiC composite.

A SiC fiber preform impregnated with PVS is pyrolyzed at 1000-1300°C in an argon atmosphere. If a heating temperature is below 1000°C, PVS is not completely converted into ceramics due to insufficient pyrolysis. Incomplete conversion means poor heat-resistance of fiber-reinforced SiC composite. If the impregnated SiC fiber preform is heated at a temperature higher than 1300°C on the contrary, pyrolyzed products are excessively crystallized and grown up to coarse grains. Excessive growth of crystal grains causes occurrence of cracks and decrease of strength.

Argon is used as an atmospheric gas for sintering the impregnated SiC fiber preform, in order to inhibit production of SiO₂ which unfavorably reduces strength of fiber-reinforced SiC composite. If the impregnated preform is pyrolyzed in an oxygen-containing atmosphere, Si-H bonds in PVS would be oxidized to SiO₂. If the impregnated preform is pyrolyzed in a nitrogen-containing atmosphere, nitrogen would be incorporated in PVS, resulting in generation of Si₃N₄. A vacuum atmosphere would put a large burden on a vacuum pump for discharging vigorous generation of gasses during pyrolysis.

The impregnated SiC fiber preform is preferably pressed with 2-10 MPa during pyrolysis. An effect of pressure-application on hardening is typically noted at a pressure of 2 MPa or more. However, application of a pressure more than 10 MPa needs an expensive press and also causes significant damages on the SiC fiber preform.

Optimal conditions for pyrolysis of the impregnated SiC fiber preform are a heating temperature of 1200°C and a pressure of 5 MPa.

Fine SiC particles added to PVS effectively suppress volumetric shrinkage of SiC matrix. Uniform dispersion of SiC particles in the impregnated SiC fiber preform is attained by impregnation of a SiC fiber preform with PVS slurry suspending fine SiC particles of 0.3 µm or less in size. But, too fine particles unfavorably increase specific surface area of SiC particles and viscosity of the PVS slurry, so that uniform dispersion of SiC particles is difficult due to aggregation. SiC particles are also aggregated or non-uniformly dispersed, when SiC particles are added to PVS at an excessive ratio. In this sense, it is preferable to add SiC particles of proper size not more than 0.3 µm at a ratio of 50 mass % or less.

The other features of the present invention will be apparent from the following examples.

### Example 1:

Continuous SiC filaments of 14 µm in average diameter were unidirectionally aligned to a sheet of 40 mm in length and 20 mm in width. 7 sheets were laminated to a SiC fiber preform with thickness of 2 mm. The SiC fiber preform was sealed in a carbon receptacle, and the carbon receptacle was set in an air-tight vessel. After the air-tight vessel was evacuated to vacuum degree lower than 1333 Pa, PVS of 10 ml was dropped to the SiC fiber preform little by little from an upper opening of the carbon receptacle. When boiling action of PVS was completely finished in the carbon receptacle, a polymer-impregnated SiC fiber preform was taken out together with the carbon receptacle from the air-tight vessel.

The polymer-impregnated SiC fiber preform was set in an argon atmosphere and heated up to 350°C (623K) at a heating rate of 300°C/h. After the impregnated SiC fiber preform was held at 350°C for 10 minutes, it was cooled down to an ambient temperature over one hour or longer. It is noted by observation of the impregnated SiC fiber preform that the infiltrating polymer was cured to a soft, elastic and yellowish solid and integrated with SiC filaments.

The impregnated SiC fiber preform was taken out from the carbon receptacle after the heat-treatment and then inserted in a carbon mold. Thereafter, the impregnated SiC fiber preform was heated up to 1200°C at a heating rate of 300°C/h under application of a unidirectional pressure of 10 MPa along a perpendicular direction in an argon atmosphere in an oven equipped with a carbon heater. The impregnated SiC fiber preform was held at 1200°C for 10 minutes and then gradually cooled in a state released from the pressure over 2 hours or longer. A product was SiC fiber-reinforced SiC-matrix composite with porosity of 40%.

The fiber-reinforced SiC composite was impregnated with PVS in vacuum and then pyrolyzed at a heating temperature up to 1200°C without a pressure. The impregnation and the pressure-less pyrolysis were alternately repeated 6 times. The fiber-reinforced SiC composite subjected to the repetition of impregnation and pressure-less pyrolysis had flexural strength of 130 MPa or more in average and fracture work of 0.37 kJ/m² with porosity reduced to 22.6%, and its fracture mode was nonlinear.

### Example 2:

Continuous SiC filaments of 14 µm in diameter were unidirectionally aligned to a SiC fiber sheet of 40 mm in length and 20 mm in width. PVS slurry, to which β-SiC particles of 0.3 µm in average size were dispersed at a ratio of 25 mass %, was dropped on the SiC fiber sheet in an open atmosphere, to impregnate the SiC fiber sheet with PVS. The impregnated SiC fiber sheet was heated up to 330°C (603K) at a heating rate of 300°C/h, held at 330°C for 10 minutes and then gradually cooled down to an ambient temperature over one hour or longer. It was noted by observation of the impregnated SiC fiber sheet that semi-cured PVS was integrated with SiC filaments.

14 of the impregnated SiC fiber sheets were laminated to a SiC fiber preform of 2 mm in thickness. The SiC fiber preform was inserted in a carbon mold, heated up to 1200°C at a heating rate of 300°C/h under application of a unidirectional pressure of 5 MPa along thickness in an argon atmosphere in an oven equipped with a carbon heater, held at 1200°C for 10 minutes and then cooled in a pressure-released state over 2 hours or longer. A product was SiC fiber-reinforced SiC-matrix composite with porosity of 33%.

The fiber-reinforced SiC composite was impregnated with PVS in vacuum and pyrolyzed with pressure at a temperature not higher than 1200°C. The impregnation and the pressure-less pyrolysis were alternately repeated 6 times. The SiC fiber-reinforced SiC-matrix composite subjected to repetition of impregnation and pressure-less pyrolysis had flexural strength of 334 MPa in average and fracture work of 1.7 kJ/m² with porosity reduced to 12%.

### Example 3:

Continuous SiC filaments of 14 µm in diameter were unidirectionally aligned to a SiC fiber sheet of 40 mm in length and 20 mm in width. PVS slurry, to which β-SiC particles of 0.3 µm in average size were dispersed at a ratio of 25 mass %, was dropped on the SiC fiber sheet in an open atmosphere to impregnate the SiC fiber sheet. The PVS-impregnated SiC fiber sheet was heated up to 350°C at a heating rate of 300°C/h in an argon atmosphere, held at 350°C for 10 minutes and then cooled down to an ambient temperature over one hour or longer. It was noted by observation of the impregnated SiC fiber sheet that semi-cured PVS was integrated with SiC filaments.

14 of the impregnated SiC fiber sheets were laminated to a SiC fiber preform of 2 mm in thickness. The SiC fiber preform was inserted in a carbon mold, heated up to 1200°C at a heating rate of 300°C/h in an argon atmosphere in an oven equipped with a carbon heater under application of a unidirectional pressure of 10 MPa along thickness, held at 1200°C for 10 minutes and then cooled in a pressure-released state over 2 hours or longer. A product was SiC fiber-reinforced SiC-matrix composite with porosity of 31%.

The fiber-reinforced SiC composite was further impregnated with PVS in vacuum and pyrolyzed with pressure at a temperature of 1200°C or lower. The impregnation and the pressure-less pyrolysis were alternately repeated 6 times. Fiber-reinforced SiC composite subjected to the repetition of impregnation and pressure-less pyrolysis had flexural strength of 375 MPa in average and fracture work of 2.1 kJ/m² with porosity reduced to 15%.

Results of Examples 1 to 3 prove that SiC fiberreinforced SiC-matrix composite excellent in flexural strength and fracture work can be produced by combination of pre-curing PVS under properly controlled conditions with pyrolysis under application of a unidirectional pressure. The fiber-reinforced SiC composite is further densified by dispersion of fine SiC particles in PVS slurry for impregnation of a SiC fiber preform.

### INDUSTRIAL APPLICATION OF THE INVENTION

According to the present invention as above-mentioned, thermosetting PVS is used as a preceramic polymer for impregnation of a SiC fiber preform to produce fiber-reinforced SiC composite. After the SiC fiber preform is impregnated with PVS, PVS is moderated to a viscous or semi-cured state by heat-treatment in prior to pressurized pyrolysis. The viscous or semi-cured PVS does not ooze out of the SiC fiber preform even under application of a pressure during pyrolysis. PVS is also a compound, which is converted in to ceramics at a high yield ratio, among various liquid polymers. Consequently, fiber-reinforced SiC composite of dense structure with high SiC purity is produced by pressurized pyrolysis in an argon atmosphere without use of special equipment such as an electron beam-irradiating device. The fiber-reinforced SiC composite produced in this way is useful as structural members for nuclear power plants, nuclear fusion reactors, aircraft, spacecraft or the like driven under severe conditions or exposed to a severe environment due to its excellent mechanical strength and high-temperature property.

## Claims

1. A method of manufacturing high-strength SiC fiber-reinforced SiC-matrix composite, which comprises the steps of:
impregnating a SiC fiber preform with a polyvinyl-silane, which have structural units represented by the below-mentioned formulas (a) and (b) at an a/b ratio of 1, in an open or evacuated atmosphere;
preheating said SiC fiber preform impregnated with said polyvinyl-silane at 300-400°C in an inert gas atmosphere to moderate said polyvinyl-silane to a viscous or semi-cured state; and
pyrolyzing the preheated SiC fiber preform in an argon atmosphere under application of a unidirectional pressure.

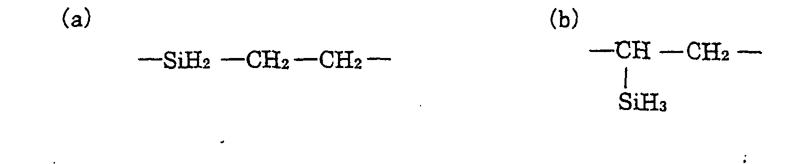

2. The method of manufacturing high-strength SiC fiber-reinforced SiC-matrix composite defined in Claim 1, wherein the SiC fiber preform is impregnated with polyvinyl-silane, which uniformly disperses fine SiC particles therein at a ratio of 50 mass % or less.

3. The method of manufacturing high-strength SiC fiber-reinforced SiC-matrix composite defined in Claim 1, wherein impregnation of the SiC fiber preform with sole polyvinyl-silane and pressure-less pyrolysis are alternately repeated.
